(19) 

Europäisches
Patentamt
European
Patent Office
Office européen
des brevets

(11) **EP 4 332 836 A1**

(12) **EUROPEAN PATENT APPLICATION**

(43) Date of publication:
**06.03.2024 Bulletin 2024/10**

(51) International Patent Classification (IPC):
***G06N 3/063*** (2023.01)

(21) Application number: **23188178.0**

(22) Date of filing: **27.07.2023**

(52) Cooperative Patent Classification (CPC):
**G06N 3/063**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.08.2022 IN 202221049467**

(71) Applicant: **Tata Consultancy Services Limited Maharashtra (IN)**

(72) Inventors:
• **MISHRA, Mayank**
  **400 607 Thane West - Maharashtra (IN)**
• **SINGH, Ravi Kumar**
  **400 607 Thane West - Maharashtra (IN)**
• **SINGHAL, Rekha**
  **400 607 Thane West - Maharashtra (IN)**

(74) Representative: **Goddar, Heinz J. et al**
**Boehmert & Boehmert**
**Anwaltspartnerschaft mbB**
**Pettenkoferstrasse 22**
**80336 München (DE)**

(54) **METHOD AND SYSTEM FOR SWITCHING BETWEEN HARDWARE ACCELERATORS FOR DATA MODEL TRAINING**

(57) Existing approaches for switching between different hardware accelerators in a heterogeneous accelerator approach have the disadvantage that complete potential of the heterogeneous hardware accelerators do not get used as the switching relies on load on the accelerators or a random switching in which entire task gets reassigned to a different hardware accelerator. The disclosure herein generally relates to data model training, and, more particularly, to a method and system for data model training using heterogeneous hardware accelerators. In this approach, the system switches between hardware accelerators when a measured accuracy of the data model after any epoch is below a threshold of accuracy.

FIG. 2

**Description**

CROSS-REFERENCE TO RELATED APPLICATIONS AND PRIORITY

The present application claims priority to Indian application no. 202221049467, filed on August 30, 2022.

TECHNICAL FIELD

The disclosure herein generally relates to data model training, and, more particularly, to a method and system for data model training using heterogeneous hardware accelerators.

BACKGROUND

Machine learning model workloads inherently have a data-flow execution architecture, which can be accelerated using hardware accelerators. Hardware accelerators of different specifications and capabilities are available in the market. For example, the hardware accelerators may be different in terms of parameters such as but not limited to inference latency, training time, and the prediction accuracy of the models trained on the different hardware accelerators.

The model training may include a number of tasks. Some of the tasks maybe more process intensive and some maybe less process intensive. While using the hardware accelerators having high specifications may improve certain aspects such as processing speed, they maybe expensive and may require significantly higher supporting hardware, and hence may not be suitable to be considered for prolonged usage. On the other hand, hardware accelerators having comparatively lower specifications are cheaper and require less supporting hardware, while still being able to handle all the tasks that are less process intensive.

This is where concept of heterogeneous accelerators coming into picture. Heterogeneous accelerators refers to use of a set of hardware accelerators with varying specifications and capabilities. Some systems exist which use heterogeneous accelerators for different applications, and which consider switching between different hardware accelerators. Some of the state of the art approaches perform the switching, by considering utilization levels. This approach has the disadvantage that as long as the utilization level/load on a current processor hasn't reached a threshold level, system continues to use the current processor, and this results in complete potential of the heterogeneous hardware accelerators not being used. Some other state of the art approaches determines which among available hardware accelerators is to be used for a particular job, and selected hardware accelerator end up being used to handle entire load, irrespective of other hardware accelerators being available to share load. In this approach as well, the complete potential of the heterogeneous hardware accelerators remain unutilized.

SUMMARY

Embodiments of the present disclosure present technological improvements as solutions to one or more of the above-mentioned technical problems recognized by the inventors in conventional systems. For example, in one embodiment, a processor implemented method is provided. In this method, a data model training is initiated using a first hardware accelerator from among a plurality of heterogeneous hardware accelerators, wherein the data model training is spread across a plurality of epochs. Further, the following steps are iteratively performed till one of a) a maximum accuracy is achieved for the data model, and b) a final hardware accelerator in a sequence of the plurality of heterogeneous hardware accelerators has reached. Accuracy of the data model is measured after each of the plurality of epochs. Further, if difference between the accuracy of the data model measured in two consecutive epochs of the plurality of epochs is determined as exceeding a threshold of accuracy, then the data model training is switched to next hardware accelerator in the sequence of the plurality of heterogeneous hardware accelerators.

In another aspect, a system is provided. The system includes one or more hardware processors, a communication interface, and a memory storing a plurality of instructions. The plurality of instructions when executed, cause the one or more hardware processors to initiate a data model training using a first hardware accelerator from among a plurality of heterogeneous hardware accelerators, wherein the data model training is spread across a plurality of epochs. Further, the following steps are iteratively performed till one of a) a maximum accuracy is achieved for the data model, and b) a final hardware accelerator in a sequence of the plurality of heterogeneous hardware accelerators has reached. Accuracy of the data model is measured after each of the plurality of epochs. Further, if difference between the accuracy of the data model measured in two consecutive epochs of the plurality of epochs is determined as exceeding a threshold of accuracy, then the data model training is switched to next hardware accelerator in the sequence of the plurality of heterogeneous hardware accelerators.

In yet another aspect, a non-transitory computer readable medium is provided. The non-transitory computer readable medium includes a plurality of instructions which when executed, cause one or more hardware processors to

initiate a data model training using a first hardware accelerator from among a plurality of heterogeneous hardware accelerators, wherein the data model training is spread across a plurality of epochs. Further, the following steps are iteratively performed till one of a) a maximum accuracy is achieved for the data model, and b) a final hardware accelerator in a sequence of the plurality of heterogeneous hardware accelerators has reached. Accuracy of the data model is measured after each of the plurality of epochs. Further, if difference between the accuracy of the data model measured in two consecutive epochs of the plurality of epochs is determined as exceeding a threshold of accuracy, then the data model training is switched to next hardware accelerator in the sequence of the plurality of heterogeneous hardware accelerators.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for switching between heterogeneous hardware accelerators, according to some embodiments of the present disclosure.
FIG. 2 is a flow diagram depicting steps involved in the process of switching between heterogeneous hardware accelerators, using the system of FIG. 1, according to some embodiments of the present disclosure.
FIG. 3 is a data flow diagram depicting the switching between heterogeneous hardware accelerators, using the system of FIG. 1, in accordance with some embodiments of the present disclosure.
FIG. 4 is an example implementation of switching between a Graphcore Infrastructure Processing Unit (IPU) and a Graphics Processing Unit (GPU), using the system of FIG. 1, according to some embodiments of the present disclosure.
FIGS. 5A and 5B depict experimental data showing time and accuracy performance when the system of FIG. 1 is used for switching between hardware accelerators in a couple of example implementations, in accordance with some embodiments of the present disclosure.

DETAILED DESCRIPTION OF EMBODIMENTS

Exemplary embodiments are described with reference to the accompanying drawings. In the figures, the leftmost digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Heterogeneous accelerators refers to use of a set of hardware accelerators with varying specifications and capabilities. Some systems exist which use heterogeneous accelerators for different applications, and which consider switching between different hardware accelerators. Some of the state of the art approaches perform the switching, by considering utilization levels. This approach has the disadvantage that as long as the utilization level/load on a current processor hasn't reached a threshold level, system continues to use the current processor, and this results in complete potential of the heterogeneous hardware accelerators not being used. Some other state of the art approaches determines which among available hardware accelerators is to be used for a particular job, and selected hardware accelerator end up being used to handle entire load, irrespective of other hardware accelerators being available to share load. In this approach as well, the complete potential of the heterogeneous hardware accelerators remain unutilized.

In order to address these challenges, embodiments herein disclose a method and system which enables a precision/accuracy based switching between hardware accelerators in a set of heterogeneous accelerators. The hardware accelerators in the set of heterogeneous accelerators are arranged in a sequence in increasing order of specification. Model training is initiated with a first hardware accelerator in the sequence, and after each epoch, checks if accuracy of the model training is below a threshold of accuracy in any of a plurality of epochs across which the model training is taking place. If after any of the epochs the accuracy is identified as falling below the threshold of accuracy, the system switches the model training to next hardware accelerator in the sequence of hardware accelerators. This is iterated till one of a) a maximum accuracy is achieved for the data model, and b) a final hardware accelerator in a sequence of the plurality of heterogeneous hardware accelerators has reached.

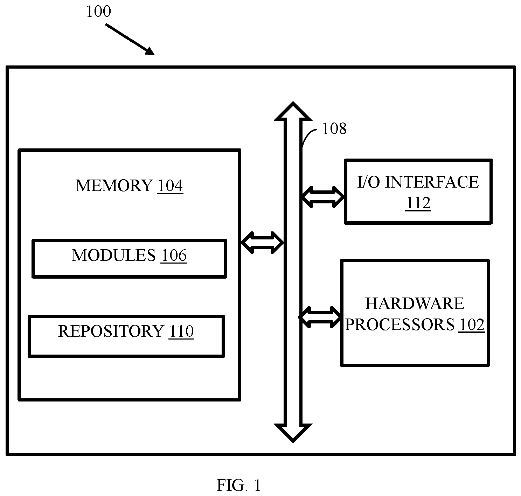

Referring now to the drawings, and more particularly to FIG. 1 through FIG. 5B, where similar reference characters denote corresponding features consistently throughout the figures, there are shown preferred embodiments and these embodiments are described in the context of the following exemplary system and/or method.

FIG. 1 illustrates an exemplary system for switching between heterogeneous hardware accelerators, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of switching between hardware accelerators for model training, being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the switching between hardware accelerators for model training.

The data repository (or repository) 110 may include a plurality of abstracted piece of code for refinement and data that is processed, received, or generated as a result of the execution of the plurality of modules in the module(s) 106.

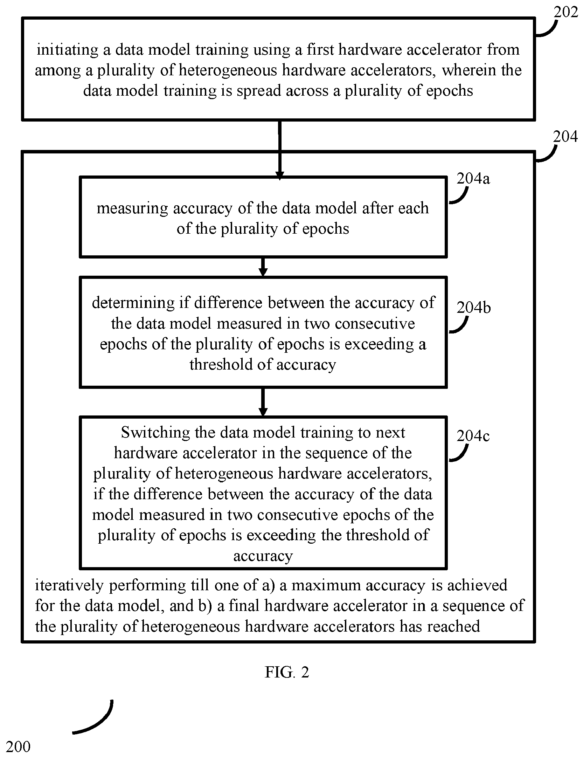

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the steps in flow diagram in FIG. 2, and the FIGS. 3 through 5B.

FIG. 2 is a flow diagram depicting steps involved in the process of switching between heterogeneous hardware accelerators, using the system of FIG. 1, according to some embodiments of the present disclosure. In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

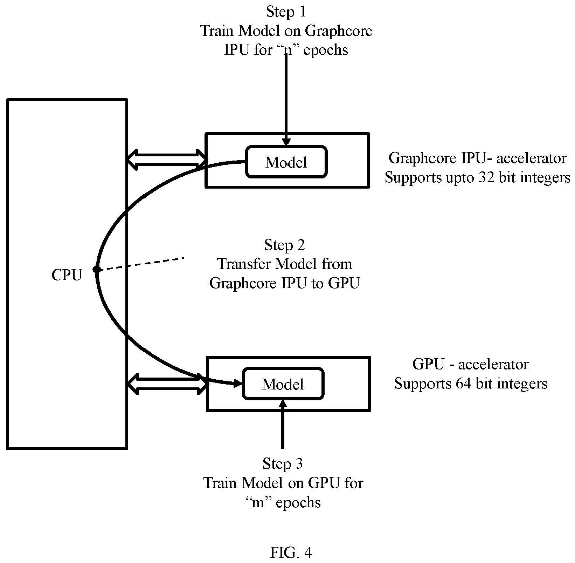

Consider the example in FIG. 4, in which a Central Processing Unit (CPU) uses two hardware accelerators, i.e. a Graphcore IPU accelerator and a GPU accelerator. In similar manner, more number of hardware accelerators maybe used as per implementation and data processing requirements. The hardware accelerators used maybe of different specifications. The term 'specifications' used in the context of the hardware accelerators refers to capability/attributes of each of the hardware accelerators. For example, each of the hardware accelerators may have different processing speeds, inference latency, training time, and so on. Combination of values of such parameters for each of the hardware accelerators represents the specification of the hardware accelerator.

With reference to method 200 in FIG. 2, at step 202 of the method 200, the system 100 initiates a data model training using a first hardware accelerator from among a plurality of heterogeneous hardware accelerators. In an embodiment, the plurality of heterogeneous hardware accelerators which forms a set of hardware accelerators, is arranged in increasing order of the specifications i.e. the hardware accelerator with least specification comes first in the sequence of hardware accelerators and is referred to as the 'first hardware accelerator'. Subsequently the remaining hardware accelerators maybe termed as second hardware accelerator, third hardware accelerator, and so on. In an embodiment, the term 'specification' in the context of embodiments disclosed herein may refer to a measured precision/accuracy of each of the hardware accelerators. In another embodiment, the term 'specification' may refer to any other parameter such as but not limited to processing speed, and any combination thereof.

The data model training is spread across a plurality of epochs. The term 'epochs' in the context of embodiments disclosed herein refers to specific time periods/ time windows, which may be pre-configured as per requirements.

At step 204 of the method 200, the system 100 iteratively performs till one of a) a maximum accuracy is achieved for the data model, and b) a final hardware accelerator in a sequence of the plurality of heterogeneous hardware accelerators has reached. After each epoch, the system 100 measures accuracy of the data model at step 204a of the method 200. The system 100 may measure the accuracy of the data model by processing a test data using the data model that is obtained after each epoch. Further, at step 204 b of the method 200, the system 100 determines if difference between the accuracy of the data model measured in two consecutive epochs of the plurality of epochs is exceeding a threshold of accuracy. At this step, difference between the accuracy of the data model measured in two consecutive epochs exceeding the threshold of accuracy indicates that accuracy of the hardware accelerator that is being used for the data model training at that instance (for example, the first hardware accelerator is being used for the model training initially) is less. The system 100 is configured to consider this drop in accuracy of the hardware accelerator below the threshold of accuracy as a trigger for hardware accelerator switching, and subsequently at step 204c of the method 200, switches the data model training to next hardware accelerator in the sequence of the plurality of heterogeneous hardware accelerators. The steps 204a through 204c are iteratively performed till one of a) a maximum accuracy is achieved for the data model, and b) a final hardware accelerator in a sequence of the plurality of heterogeneous hardware accelerators has reached.

In an embodiment, the system 100 determines/identifies that the maximum accuracy has been achieved for the data model, if the measured accuracy of the data model remains constant over a pre-defined number of epochs or change in the measured accuracy of the data model is minimal (which may be decided in terms of a threshold of change) over the pre-defined number of epochs. In this case, even if there are unutilized hardware accelerators in the sequence, the model training is terminated by the system 100. Similarly, if the final hardware accelerator in the sequence of the plurality of heterogeneous hardware accelerators has reached, then the system 100 continues the model training using the same hardware accelerator even if the measured accuracy is less than the threshold of accuracy in any of subsequent epochs, as there are not further hardware accelerators to which the model training can be switched at that stage.

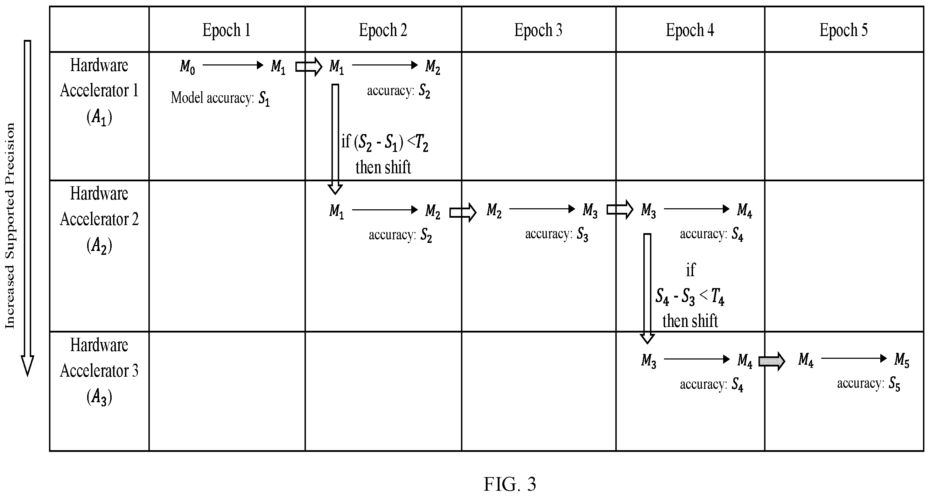

This process is further explained with reference to FIGS. 3 through 5B. In the example as depicted in FIG. 3, three hardware accelerators i.e. hardware accelerator 1 (A1), hardware accelerator 2 (A2), and hardware accelerator 3 (A3) are used for model training, and the hardware accelerators are arranged in the order A1-> A2 --> A3. The system 100 starts the model training using A1, and after first epoch (epoch 1), the model accuracy measured is S1. After second epoch (epoch 2), the model accuracy measured is S2. After epoch 2, the system 100 checks if difference between S1 and S2 is below a threshold of accuracy (T2),

$$\text{i.e. if } (S_2 - S_1) < T_2$$

If (S2 - S1) is less than T2, then the system 100 shifts the model training to A2, and the model training is resumed using A2. In epoch 3, value of the model accuracy is measured as S3, and the system 100 checks if difference between S2 and S3 is below a threshold of accuracy (T3), and determines whether or not to switch the model training to A3. In this example, as the difference between S2 and S3 is not below T3, the model training continued using A2.

Further, at epoch 4, the system 100 measures the value of model accuracy as S4, and checks if difference between S3 and S4 is below a threshold of accuracy (T4). As (S4 - S3) is less than T4, the system 100 shifts the model training to A3, and the model training is resumed using A2.

The value of threshold of accuracy for different epochs is determined such that error tolerance level is reduced with each passing epochs. For example, refer the table below:

| Epoch 1 ($T_1$) | Epoch 2 ($T_2$) | Epoch 3 ($T_3$) | Epoch 4 ($T_4$) | Epoch 5 ($T_5$) |
|---|---|---|---|---|
| NA | $N$ | $N/2$ | $N/4$ | $N/8$ |

The value of threshold of accuracy is not calculated for epoch 1 as there is no comparison happening at this stage. At epoch 2, the value of the threshold of accuracy is determined as N, which may be empirically calculated. In the subsequent epochs, the value of threshold of accuracy is calculated as equal to N/2, N/4, and N/8 respectively, i.e. the value of threshold of accuracy gets smaller with each passing epoch, and in turn the error tolerance level is reduced.

Experimental Data:

During the experiments conducted, a Normalized Item and Session Representations (NISER) model was trained using a hardware accelerator set which includes IPU and GPU hardware accelerators, in the following manner:

Step1:- Trained NISER model for $m$ epochs over IPU using batch size 20 with gradient accumulation for 5 batches
Step2:- Transferred the trained model from IPU to GPU
Step3:- Further trained NISER model for n epochs over GPU using batch size 100 with no gradient accumulation

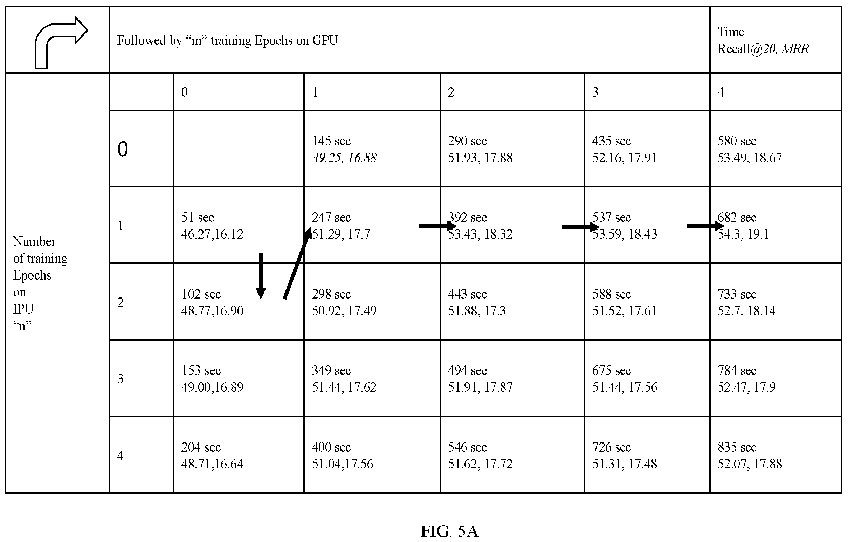

The table in FIG. 5A contain information on training time as well as training accuracy when the NISER model was trained over IPU for $n$ epochs followed by training over GPU for $m$ epochs. The cell with index (1, 3) means the model is trained for 1 epoch on IPU, followed by 3 epochs on GPU. The first row (denoted by 0) has the value of $n$ = 0, which means the training is performed only on GPU. Similarly, the first column contains the performance entries when the model is trained only on IPU. The following observations were made.

Observation 1 - Lower training time for same accuracy- When the NISER model was trained for 1 epoch on IPU followed by 2 epochs on GPU(denoted by cell with the index (1, 2)), the training accuracy achieved (Recall@20, Mean Reciprocal Rank (MRR) of 53.43, 18.32) was similar to the highest training accuracy achieved by GPU shown in cell (0, 4), which is (Recall@20, MRR of 53.49, 18.67). However, the time required to attain this similar accuracy is just 341 seconds against 580 seconds taken by GPU. This is more than a 40% reduction in training time. Model transfer time between IPU and GPU was negligible (in milliseconds), so was ignored.

Observation 2 - Higher achieved accuracy- Data against cell with index (1, 4) shows that training NISER for 1 epoch on IPU followed by 4 epochs on GPU results in higher training accuracy (Recall@20, MRR of 54.3, 19.1) than the best achieved by GPU (Recall@20, MRR of 53.49, 18.67) 6. This is the best accuracy number achieved by far. However, extra 51 seconds, which amounts to 1.8% of the total training time in GPU, were required.

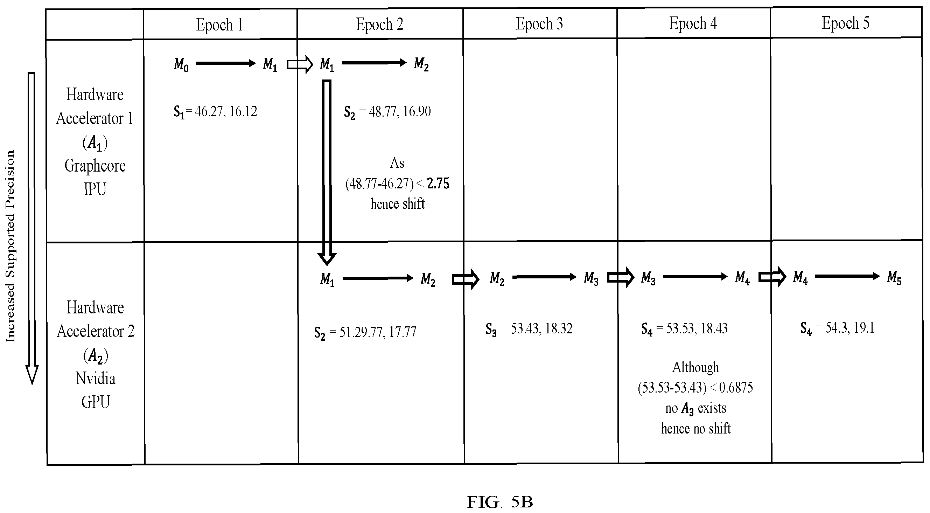

A similar experiment was conducted using IPU and CPU as the hardware accelerators, and corresponding results are presented FIG. 5B. The cell with index (3, 2) shows the training accuracy achieved when the NISER model is trained for 3 epochs on IPU and further 2 epochs on CPU. The obtained training accuracy numbers were close to the best numbers achieved by the CPU mentioned in cell (0, 3). The time taken was about 25% lesser (1513 vs 2040 seconds). The cell with index (1, 3) shows the best training accuracy was achieved when IPU and CPU combination are used, which is higher than training on CPU alone.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of effective utilization of heterogeneous hardware accelerators for data model training. The embodiment, thus provides a mechanism for accuracy based switching between hardware accelerators.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), comprising:

    initiating (202) a data model training using a first hardware accelerator from among a plurality of heterogeneous hardware accelerators, wherein the data model training is spread across a plurality of epochs; and
    iteratively (204) performing till one of a) a maximum accuracy is achieved for the data model, and b) a final hardware accelerator in a sequence of the plurality of heterogeneous hardware accelerators has reached:

    measuring (204a) accuracy of the data model after each of the plurality of epochs;
    determining (204b) if difference between the accuracy of the data model measured in two consecutive epochs of the plurality of epochs is exceeding a threshold of accuracy; and
    switching (204c) the data model training to next hardware accelerator in the sequence of the plurality of heterogeneous hardware accelerators, if the difference between the accuracy of the data model measured in two consecutive epochs of the plurality of epochs is exceeding the threshold of accuracy.

2. The method of claim 1, wherein the plurality of hardware accelerators in the sequence of the plurality of heterogeneous hardware accelerators are arranged in increasing order of specification.

3. A system (100), comprising:

    one or more hardware processors (102);
    a communication interface (112); and
    a memory (104) storing a plurality of instructions, wherein the plurality of instructions when executed, cause the one or more hardware processors to:

initiate a data model training using a first hardware accelerator from among a plurality of heterogeneous hardware accelerators,

wherein the data model training is spread across a plurality of epochs; and

iteratively perform till one of a) a maximum accuracy is achieved for the data model, and b) a final hardware accelerator in a sequence of the plurality of heterogeneous hardware accelerators has reached:

measuring accuracy of the data model after each of the plurality of epochs;

determining if difference between the accuracy of the data model measured in two consecutive epochs of the plurality of epochs is exceeding a threshold of accuracy; and

switching the data model training to next hardware accelerator in the sequence of the plurality of heterogeneous hardware accelerators, if the difference between the accuracy of the data model measured in two consecutive epochs of the plurality of epochs is exceeding the threshold of accuracy.

4. The system of claim 3, wherein the plurality of hardware accelerators in the sequence of the plurality of heterogeneous hardware accelerators are arranged in increasing order of specification.

5. One or more non-transitory machine-readable information storage mediums comprising one or more instructions which when executed by one or more hardware processors cause:

initiating a data model training using a first hardware accelerator from among a plurality of heterogeneous hardware accelerators, wherein the data model training is spread across a plurality of epochs; and

iteratively performing till one of a) a maximum accuracy is achieved for the data model, and b) a final hardware accelerator in a sequence of the plurality of heterogeneous hardware accelerators has reached:

measuring accuracy of the data model after each of the plurality of epochs;

determining if difference between the accuracy of the data model measured in two consecutive epochs of the plurality of epochs is exceeding a threshold of accuracy; and

switching the data model training to next hardware accelerator in the sequence of the plurality of heterogeneous hardware accelerators, if the difference between the accuracy of the data model measured in two consecutive epochs of the plurality of epochs is exceeding the threshold of accuracy.

6. The one or more non-transitory machine-readable information storage mediums of claim 5, wherein the plurality of hardware accelerators in the sequence of the plurality of heterogeneous hardware accelerators are arranged in increasing order of specification.

100

MEMORY 104

MODULES 106

REPOSITORY 110

108

I/O INTERFACE 112

HARDWARE PROCESSORS 102

FIG. 1

initiating a data model training using a first hardware accelerator from among a plurality of heterogeneous hardware accelerators, wherein the data model training is spread across a plurality of epochs — 202

204

measuring accuracy of the data model after each of the plurality of epochs — 204a

determining if difference between the accuracy of the data model measured in two consecutive epochs of the plurality of epochs is exceeding a threshold of accuracy — 204b

Switching the data model training to next hardware accelerator in the sequence of the plurality of heterogeneous hardware accelerators, if the difference between the accuracy of the data model measured in two consecutive epochs of the plurality of epochs is exceeding the threshold of accuracy — 204c

iteratively performing till one of a) a maximum accuracy is achieved for the data model, and b) a final hardware accelerator in a sequence of the plurality of heterogeneous hardware accelerators has reached

FIG. 2

200

Increased Supported Precision

| | Epoch 1 | Epoch 2 | Epoch 3 | Epoch 4 | Epoch 5 |
|---|---|---|---|---|---|
| Hardware Accelerator 1 $(A_1)$ | $M_0 \longrightarrow M_1$ <br> Model accuracy: $S_1$ | $M_1 \longrightarrow M_2$ <br> accuracy: $S_2$ <br><br> if $(S_2 - S_1) < T_2$ <br> then shift | | | |
| Hardware Accelerator 2 $(A_2)$ | | $M_1 \longrightarrow M_2$ <br> accuracy: $S_2$ | $M_2 \longrightarrow M_3$ <br> accuracy: $S_3$ | $M_3 \longrightarrow M_4$ <br> accuracy: $S_4$ <br><br> if <br> $S_4 - S_3 < T_4$ <br> then shift | |
| Hardware Accelerator 3 $(A_3)$ | | | | $M_3 \longrightarrow M_4$ <br> accuracy: $S_4$ | $M_4 \longrightarrow M_5$ <br> accuracy: $S_5$ |

FIG. 3

Step 1
Train Model on Graphcore
IPU for "n" epochs

Model

Graphcore IPU- accelerator
Supports upto 32 bit integers

Step 2
Transfer Model from
Graphcore IPU to GPU

CPU

GPU - accelerator
Supports 64 bit integers

Model

Step 3
Train Model on GPU for
"m" epochs

FIG. 4

| ⟳ | Followed by "m" training Epochs on GPU | | | | | Time<br>Recall@20, *MRR* |
|---|---|---|---|---|---|---|
| | | 0 | 1 | 2 | 3 | 4 |
| Number of training Epochs on IPU "n" | **0** | | 145 sec<br>*49.25, 16.88* | 290 sec<br>51.93, 17.88 | 435 sec<br>52.16, 17.91 | 580 sec<br>53.49, 18.67 |
| | 1 | 51 sec<br>46.27,16.12 | 247 sec<br>51.29, 17.7 | 392 sec<br>53.43, 18.32 | 537 sec<br>53.59, 18.43 | 682 sec<br>54.3, 19.1 |
| | 2 | 102 sec<br>48.77,16.90 | 298 sec<br>50.92, 17.49 | 443 sec<br>51.88, 17.3 | 588 sec<br>51.52, 17.61 | 733 sec<br>52.7, 18.14 |
| | 3 | 153 sec<br>49.00,16.89 | 349 sec<br>51.44, 17.62 | 494 sec<br>51.91, 17.87 | 675 sec<br>51.44, 17.56 | 784 sec<br>52.47, 17.9 |
| | 4 | 204 sec<br>48.71,16.64 | 400 sec<br>51.04,17.56 | 546 sec<br>51.62, 17.72 | 726 sec<br>51.31, 17.48 | 835 sec<br>52.07, 17.88 |

FIG. 5A

| | Epoch 1 | Epoch 2 | Epoch 3 | Epoch 4 | Epoch 5 |
|---|---|---|---|---|---|
| Hardware Accelerator 1 ($A_1$) Graphcore IPU | $M_0 \longrightarrow M_1$  $S_1 = 46.27, 16.12$ | $M_1 \longrightarrow M_2$  $S_2 = 48.77, 16.90$  As $(48.77\text{-}46.27) < \mathbf{2.75}$ hence shift | | | |
| Hardware Accelerator 2 ($A_2$) Nvidia GPU | | $M_1 \longrightarrow M_2$  $S_2 = 51.29.77, 17.77$ | $M_2 \longrightarrow M_3$  $S_3 = 53.43, 18.32$ | $M_3 \longrightarrow M_4$  $S_4 = 53.53, 18.43$  Although $(53.53\text{-}53.43) < 0.6875$ no $A_3$ exists hence no shift | $M_4 \longrightarrow M_5$  $S_4 = 54.3, 19.1$ |

Increased Supported Precision

FIG. 5B

EP 4 332 836 A1

Europäisches
Patentamt

European
Patent Office

Office européen
des brevets

**EUROPEAN SEARCH REPORT**

Application Number

EP 23 18 8178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/312772 A1 (ZHAO JUNPING [CN] ET AL) 10 October 2019 (2019-10-10) * figures 3A, 3B, 3C * * paragraphs [0002] - [0080] * | 1-6 | INV. G06N3/063 |
| A | ZHE LIN ET AL: "Scalable Light-Weight Integration of FPGA Based Accelerators with Chip Multi-Processors", ARXIV.ORG, CORNELL UNIVERSITY LIBRARY, 201 OLIN LIBRARY CORNELL UNIVERSITY ITHACA, NY 14853, 3 September 2020 (2020-09-03), XP081754225, DOI: 10.1109/TMSCS.2017.2754378 * the whole document * | 1-6 | |
| A | US 2020/042362 A1 (CUI WEI [CN] ET AL) 6 February 2020 (2020-02-06) * paragraphs [0002] - [0070] * | 1-6 | |
| A | US 2020/184368 A1 (DUENNER CELESTINE [CH] ET AL) 11 June 2020 (2020-06-11) * paragraphs [0001] - [0060] * | 1-6 | TECHNICAL FIELDS SEARCHED (IPC) G06N |

The present search report has been drawn up for all claims

| Place of search | Date of completion of the search | Examiner |
|---|---|---|
| The Hague | 19 January 2024 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 8178

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2024

| Patent document cited in search report | | Publication date | Patent family member(s) | | Publication date |
|---|---|---|---|---|---|
| US 2019312772 | A1 | 10-10-2019 | NONE | | |
| US 2020042362 | A1 | 06-02-2020 | CN | 110795228 A | 14-02-2020 |
| | | | US | 2020042362 A1 | 06-02-2020 |
| US 2020184368 | A1 | 11-06-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221049467